# EUROPEAN PATENT APPLICATION

(11) **EP 4 773 024 A1**
(43) Date of publication of application: **08.07.2026**
(21) Application number: 24858637.2
(22) Date of filing: 28.08.2024
(51) Int. Cl.: G06F 16/958

(54) **INTERFACE JUMP METHOD AND APPARATUS, ELECTRONIC DEVICE, MEDIUM AND PRODUCT**

(30) Priority: 29.08.2023 CN 202311103663
(71) Applicant: Beijing Zitiao Network Technology Co., Ltd., Beijing 100190 (CN)
(72) Inventor: ZHAO, Anjiang, Beijing 100028 (CN)
(74) Representative: Grünecker Patent- und Rechtsanwälte PartG mbB
(86) International application number: PCT/CN2024/115233
(87) International publication number: WO 2025/045104

(57) **Abstract**

Embodiments of the disclosure disclose a method, an apparatus, an electronic device, a storage medium and a product for interface switch, and the method includes: obtaining, in response to obtaining an interface switch instruction for performing an interface switch between an image-text details page and an associated interface, display position information of an interface switch reference image in the image-text details page and the associated interface; creating, based on the display position information and an interface switch direction between the image-text details page and the associated interface, a region mask for an interface region adjacent to the interface switch reference image in the image-text details pageand determining, based on the display position information, a target interface switch animation for the interface switch reference image and the region mask, and implementing the interface switch between the image-text details page and the associated interface based on the target interface switch animatione.

## Description

This application claims the priority to Chinese Patent Application No. 202311103663.1, filed on August 29, 2023, entitled "METHOD, APPARATUS, ELECTRONIC DEVICE, MEDIUM AND PRODUCT FOR INTERFACE SWITCH," which is hereby incorporated by reference in its entirety.

### FIELD

Embodiments of the disclosure relate to the technical field of computers, in particular to a method, an apparatus, an electronic device, a medium and a product for interface switch.

### BACKGROUND

During the use of some applications, in order to make the interface switch appear more smooth and natural visually, an interface transition effects, such as transition animations, are usually added during the interface switch, so that the transition between different interfaces is more natural.

### SUMMARY

The disclosure provides a method, an apparatus, an electronic device, a medium and a product for interface switch.

In a first aspect, embodiments of the present disclosure provide a method for interface switch, and the method includes: obtaining, in response to obtaining an interface switch instruction for performing an interface switch between an image-text details page and an associated interface, display position information of an interface switch reference image in the image-text details page and the associated interface, respectively; creating, based on the display position information and an interface switch direction between the image-text details page and the associated interface, a region mask for an interface region adjacent to the interface switch reference image in the image-text details page; determining, based on the display position information, a target interface switch animation for the interface switch reference image and the region mask, and implementing the interface switch between the image-text details page and the associated interface based on the target interface switch animation.

In a second aspect, embodiments of the present disclosure further provide an apparatus for interface switch, and the apparatus includes: a switch reference image information obtaining module configured to obtain, in response to obtaining an interface switch instruction for performing an interface switch between an image-text details page and an associated interface, display position information of an interface switch reference image in the image-text details page and the associated interface, respectively; a mask creating module configured to create, based on the display position information and an interface switch direction between the image-text details page and the associated interface, a region mask for an interface region adjacent to the interface switch reference image in the image-text details pagee; an interface switch animation determining and switching module configured to determine, based on the display position information, a target interface switch animation for the interface switch reference image and the region mask, and implement the interface switch between the image-text details page and the associated interface based on the target interface switch animation.

In a third aspect, embodiments of the present disclosure further provide an electronic device, including: one or more processors; and a storage device configured to store one or more programs, where the one or more programs, when executed by the one or more processors, cause the one or more processors to implement the method for interface switch according to any one of the embodiments of the present disclosure.

In a fourth aspect, embodiments of the present disclosure further provide a storage medium including computer-executable instructions, where the computer-executable instructions, when executed by a computer processor, are configured to perform the method for interface switch according to any one of the embodiments of the present disclosure.

In a fifth aspect, embodiments of the present disclosure further provide a computer program product, including a computer program, where the computer program, when executed by a processor, implements the method for interface switch according to any one of the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and elements and elements are not necessarily drawn to scale.
FIG. 1 is a schematic flowchart of a method for interface switch according to embodiments of the present disclosure;
FIG. 2 is a schematic flowchart of a method for interface switch according to embodiments of the present disclosure;
FIG. 3 is a schematic diagram of a process of switching from an associated page to an image-text details according to embodiments of the present disclosure;
FIG. 4 is a schematic flowchart of an exemplary method for interface switch according to embodiments of the present disclosure;
FIG. 5 is a schematic diagram of a process of switching from an image-text details page to an associated interface according to embodiments of the present disclosure;
FIG. 6 is a schematic structural diagram of an apparatus for interface switch according to embodiments of the present disclosure; and
FIG. 7 is a schematic structural diagram of an electronic device according to embodiments of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and vice versa. It should be understood that the drawings and embodiments of the present disclosure are for exemplary purposes only and are not intended to limit the scope of the present disclosure.

It should be understood that the steps recited in the method embodiments of the present disclosure may be performed in different orders, and/or in parallel. Further, the method embodiments may include additional steps and/or omit performing the illustrated steps. The scope of the present disclosure is not limited in this respect.

As used herein, the term "including" and variations thereof are open-ended, i.e., "including but not limited to". The term "based on" is "based at least in part on". The term "one embodiment" means "at least one embodiment"; the term "another embodiment" means "at least one further embodiment"; the term "some embodiments" means "at least some embodiments". The relevant definitions of other terms will be given below.

It should be noted that the concepts such as "first" and "second" mentioned in this disclosure are merely used to distinguish different apparatuses, modules, or units, rather than limiting the order of functions performed by the apparatuses, modules, or units or the mutual dependency relationship.

It should be noted that the modifications of "one" and "a plurality of" mentioned in this disclosure is illustrative rather than limiting, and those skilled in the art should understand that, unless otherwise explicitly indicated in the context, they should be understood as "one or more".

It can be understood that, before the technical solutions disclosed in the embodiments of the present disclosure are used, the types, usage scope, usage scenario and the like of personal information related to the present disclosure, should be notified to the user in an appropriate manner according to the relevant laws and regulations and obtain the authorization of the user.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It may be understood that the foregoing process of notifying and obtaining a user authorization is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related provisions.

During the use of some applications, in order to make the interface switch appear more smooth and natural visually, an interface transition effect, such as transition animations, are usually added during the interface switch, so that the transition between different interfaces is more natura.

However, it is found in the practice of the application that when switching from the thumbnail information list page or the full-screen image-text introduction page to the image-text details page, for the case where the image is at the top or the bottom of the interface in the image-text details page, the interface switch effect is better, while in the case that the image is in the middle position of the interface in the image-text details page, the interface switch animation effect is not good.

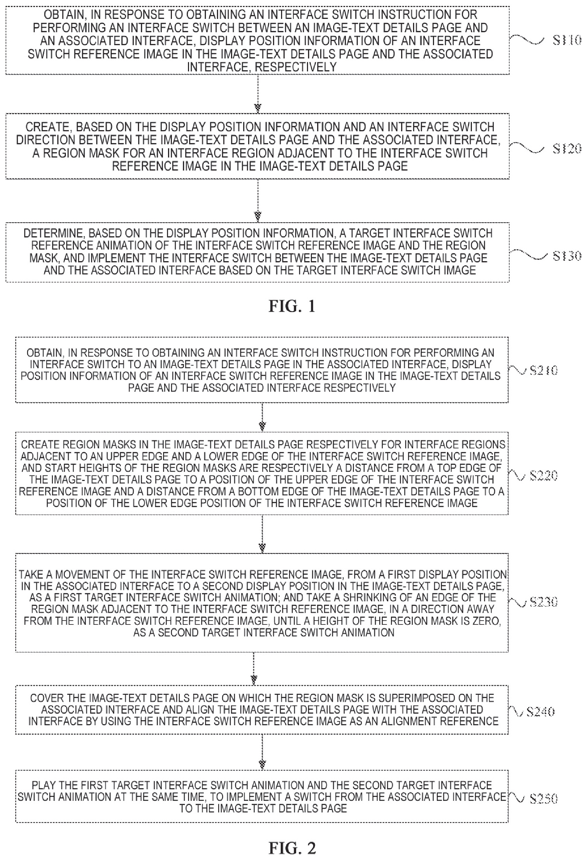

FIG. 1 is a schematic flowchart of a method for interface switch according to embodiments of the present disclosure. The embodiments of the disclosure are suitable for the scene of interface switch, in particular to the case of switching between the image-text details page and the associated interface. The method may be performed by an interface switch apparatus. The apparatus may be implemented in a form of software and/or hardware. Optionally, the apparatus is implemented by an electronic device. The electronic device may be a mobile terminal, a PC terminal, a server, or the like.

As shown in FIG. 1, the method for interface switch includes the following.

In S110, in response to obtaining an interface switch instruction for performing an interface switch between an image-text details page and an associated interface, display position information of an interface switch reference image in the image-text details page and the associated interface is obtained, respectively.

The image-text details page and the associated interface may be an interface having a switch link or association in content between in any application program. The image-text details page may be an interface that describes detailed content of certain object in the form of an image and a text. The interface corresponding to the associated interface may be a thumbnail/preview information interface of a plurality of different objects including the object described by the image-text details page, and is an upper level interface switching to the image-text details page, or a target interface switching to which the image-text details page switchs. The direction of the interface switch may be switching from the associated interface to the image-text details page, or may be returned from the image-text details page to the associated interface.

It may be understood that the obtained interface switch instruction for performing the interface switch between the image-text details page and the associated interface may be an instruction for switching from the associated interface to the image-text details page, or may be an instruction for switching from the image-text details page to the associated interface. The technical solution of this embodiment is applicable to both cases. The switch direction corresponding to the interface switch instruction may be determined based on a corresponding display interface when interface switch instruction being obtained. For example, if the interface switch instruction is obtained in the associated interface, the instruction is a switch instruction from the associated interface to the image-text details page. When obtaining the interface switch instruction on the switch start page, the switch target page is loaded in advance before the switch target page is displayed, and the transition animation in the corresponding interface switch process is generated based on the solution of this embodiment.

Generally, in the image-text details page, the image is displayed at the top of the interface, so when switching from the associated interface to the image-text details page, the interface switch reference image is directly moved to the top end of the image-text details page, with the text content following the interface switch reference image, to achieve the interface switch. Obviously, the conventional interface switch method is not applicable to the situation where the interface switch reference image is displayed at the middle position of the image-text details page, and if the interface switch reference image is moved to the top end, the content corresponding to the upper region of the interface switch reference image cannot be displayed.

In this embodiment, the image-text details page is divided into different content regions based on the interface switch reference image, and the interface switch process is processed in the term of each region. The interface switch reference image is an image displayed on the switch start page in the image-text details page and the associated interface when the interface switch instruction is obtained. The reason why an interface switch reference image is referred to as a reference image is that the switch target page also needs to display the same image, that is, during the interface switch the switch target page and the switch start page need to display or play consistent content, such as an interface switch reference image. In a feasible implementation, after the interface switch instruction is obtained, display position information of the interface switch reference image in the image-text details page and the associated interface may be respectively obtained, so that subsequently different interface switch transition animations are generated for content of different regions in the image-text details page and the associated interface respectively based on the display position information of the interface switch reference image. The obtaining of the display location information may be achieved by calling some functions or application interfaces with parameter reading capabilities to read the relevant location information.

S120, based on the display position information and an interface switch direction between the image-text details page and the associated interface, a region mask is created for an interface region adjacent to the interface switch reference image in the image-text details page.

The interface switch direction between the image-text details page and the associated interface may be determined when the interface switch instruction is obtained. When the interface switch direction is from the associated interface to the image-text details page, that is, the content in the image-text details page needs to be displayed, while the opposite interface switch direction means returning to the associated interface from the image-text details page, the switch is a process that the content of the image-text details page is covered and no longer displayed. Therefore, in the process of performing mask processing on the image-text details page, different interface switch directions correspond to different region mask creation schemes.

The location information of the display location information of the interface switch reference image may determine the size and location of the location region where region mask needs to be created. The location where the region mask needs to be created may be the non-image area above and below the interface switch reference image in the image-text details page. If the number of the interface switch reference images is one, the position for creating region mask includes two areas; if the number of the interface switch reference images is greater than one, the corresponding number of region masks may be created based on the number of interface regions separated by each interface switch reference image in the image-text details page. The interface switch direction can determine whether each region part in the image-text details page is displayed or hidden, which determines the start parameter of each region mask in the transition animation in the interface switch process, for example, if each region part in the image-text details page is to be displayed, the region mask needs to shrink gradually to display the hidden content; if each region part in the image-text details page is shielded and hidden, the region mask needs to be gradually expanded to shield the displayed content gradually.

S130, based on the display position information, a target interface switch reference animation of the interface switch reference image and the region mask is determined, and the interface switch between the image-text details page and the associated interface is implemented based on the target interface switch image.

In this embodiment, the interface switch effect may be an open-close interface switch effect, and the final target interface switch animation is a superimposed animation effect of the switch animation corresponding to the interface switch reference image and the switch animation corresponding to the region mask.

The display position information includes two display position information of the interface switch reference image in the switch start page and the switch target page, and the switch animation of the interface switch reference image may be a movement from its corresponding display position in the switch start page to its corresponding display position in the switch target page. Correspondingly, the switch animation corresponding to the region mask may be an animation process for extending or shrinking the region determined based on the display position. The switch animation corresponding to the interface switch reference image and the switch animation corresponding to the region mask are simultaneously played, that is, a smooth interface switch effect between the image-text details page and the associated interface is achieved.

According to the technical solution of embodiments of the disclosure, the display position information of the interface switch reference image in the image-text details page and the associated interface is respectively obtained when the interface switch instruction for performing an interface switch between the image-text details page and the associated interface is obtained; based on the display position information and the interface switch direction between the image-text details page and the associated interface, a region mask is created for interface region adjacent to the interface switch reference image in the image-text details page; and a target interface switch animation of the interface switch reference image and the region mask is determined based on the display position information, and an interface switch between the image-text details page and the associated interface is achieved based on the target interface switch animation. A The technical solution provided by the embodiments of the disclosure addresses the issue that the existing interface switch scheme between the associated interface and the image-text details page is not applicable to the case that image in the image-text details page is not at the top end of the image-text details page, and has certain limitation, the transition animation processing can be performed respectively for the image and non-image region in the image-text details page during the interface switch between each associated interface and the image-text details page, so that the interface switch between the associated interface and the image-text details page with different styles has better transition effect of interface switch, and the smooth transition can be achieved during switching into or exiting the image and image-text details page.

FIG. 2 is a schematic flowchart of one further method for interface switch according to embodiments of the present disclosure. On the basis of the above embodiments, in the process of implementing the interface switch method flow, the process of switching from the associated interface of the image-text details page to the image-text details page is further explained and illustrated. The method may be performed by an interface switch apparatus, and the apparatus may be implemented in a form of software and/or hardware. Optionally, the apparatus is implemented by an electronic device. The electronic device may be a mobile terminal, a PC terminal, a server, or the like.

As shown in FIG. 2, the method for interface switch includes the following.

In S210, in response to obtaining an interface switch instruction for performing an interface switch to an image-text details page in the associated interface, display position information of an interface switch reference image in the image-text details page and the associated interface is obtained respectively.

In this embodiment, after the interface switch instruction is obtained, it may be determined that the interface for obtaining the interface switch instruction is the switch start page, and the image-text details page having the link relationship (the association relationship) with the switch start interface is the switch target page. The switch start interface is an associated interface of the switch target page. Before the interface switch is implemented, the pre-loading of the switch target page needs to be performed. There may be multiple images in the pre-loaded switch target page, and a predetermined play logic exists between the images, in order to ensure that the play progress of the image after the interface switch is synchronized with the play progress of the t image before the interface switch. Therefore, the current display image of the switch start page is determined as an interface switch reference image. Then, display position information of the interface switch reference image in the image-text details page and the associated interface is obtained respectively, so as to perform subsequent interface switch animation processing based on the obtained display position information.

Specifically, when the interface switch instruction is obtained at the switch start page, for example, if the user clicks one information object in the information column, it is confirmed that the image-text details page of the information object is determined as the switch target page, then the switch target page is pre-loaded in advance before the switch target page is displayed, and the transition animation in the corresponding interface switch process is generated based on the solution of this embodiment.

S220, region masks respectively for interface regions adjacent to an upper edge and a lower edge of the interface switch reference image are created in the image-text details page, and start heights of the region masks are respectively a distance from a top edge of the image-text details page to a position of the upper edge of the interface switch reference image and a distance from a bottom edge of the image-text details page to a postion of the lower edge position of the interface switch reference image.

The upper edge and the lower edge of the interface switch reference image are determined based on its display position information. When the interface switch reference image is in non-top middle position of the image-text details page, the image-text details page may be divided into three regions, that is, the interface switch reference image, the non-image region above the interface switch reference image, and the non-image region below the interface switch reference image.

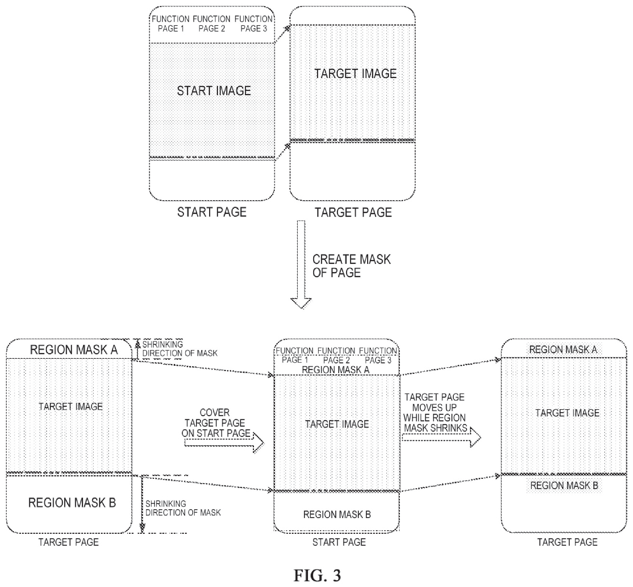

For example, reference may be made to the start page and the target page shown in FIG. 3. In the starting interface, different functional interfaces may be switched by sliding left/right in the display interface. Further, in any one of the functional interfaces, if a user clicks an information object, an interface switch may be triggered to switch to an image-text details page (a switch target page) corresponding to the clicked information object.

Further, in the start page and the target page shown in FIG. 3, the start image and the target image are images of the interface switch reference image displayed respectively at corresponding positions in the start page and the target page. In the target page, a region connected to the upper edge and the lower edge of the target image may be determined based on the position information of the target image, and a corresponding region mask, such as the region mask A and the region mask B, may be created. The height of the region mask A is the distance between the top edge of the image-text details page and the upper edge of the target image, and the height of the region mask B is the distance between the low edge of the image-text details page and the lower edge of the target image. The two region masks, one masking target image, and one masking target image, so that the visible region in the target page is only the target image.

S230, a movment of the interface switch reference image, from a first display position in the associated interface to a second display position in the image-text details page, is taken as a first target interface switch animation; and a shrinking of an edge of the region mask adjacent to the interface switch reference image, in a direction away from the interface switch reference image, until a height of the region mask is zero, is taken as a second target interface switch animation.

In this step, two target switch images are determined, and the target is to smoothly transition the sight line of the user from the position of the start image to the position of the target image.

S240, the associated interface is covered by the image-text details page on which the region mask is superimposed and aligned with the image-text details page by using the interface switch reference image as an alignment reference.

In this step, the target image added with the region mask is covered on the start image, and the target image is overlapped with the start image, so that the user cannot perceive the existence of the target page. After the target image is aligned with the start image, in this case, both the geometric positions of the target image and the start image are position of the start image, and no change occurs to the start page for the user.

S250: the first target interface switch animation and the second target interface switch animation are played at the same time, to implement a switch from the associated interface to the image-text details pagee.

The process of two animations are started at the same time, one animation is that the position of the target image in the target page covered on the start page is the position of the start image, which needs to be moved to the original position by the displacement animation, and the animation mode can be translation along the Y-axis of the screen. The other animation is that when the target image moves, the region mask A and the region mask B need to change the mask height at the same time. The two region masks need to be shrunk to the two sides of the screen. This process causes the target page to gradually reveal more content while covering the underlying start page. This can bring an effect of unfolding and exposing the target page.

After the animation is completed, the target page is completely displayed, and at the same time the start page disappears completely, which represents that the transition between the interfaces ends.

According to the technical solution of the embodiment of the disclosure, the display position information of the interface switch reference image in the image-text details page and the associated interface is respectively obtained when an interface switch instruction for performing interface switch to the image-text details page is obtained at the associated interface; a region mask is created in the image-text details page for an interface region adjacent to the upper edge and the lower edge of the interface switch reference image respectively, and the start heights of the region mask are respectively a distance from a top edge of the image-text details page to a position of the upper edge of the interface switch reference image and a distance from a bottom edge of the image-text details page to a postion of the lower edge position of the interface switch reference image; a movment of the interface switch reference image, from a first display position in the associated interface to a second display position in the image-text details page, is taken as a first target interface switch animation; and a shrinking of an edge of the region mask adjacent to the interface switch reference image, in a direction away from the interface switch reference image, until a height of the region mask is zero, is taken as a second target interface switch animation, then the interface switch reference image is taken as an alignment reference, the image-text details page superposed with the region mask is covered on the associated interface and aligned with the associated interface, and the first target interface switch animation and the second target interface switch animation are played at the same time, achieving a switch from the associated interface to the image-text details page . The technical solution provided by the embodiments of the disclosure addresses the issue that the existing interface switch scheme between the associated interface and the image-text details page is not applicable to the case that image in the image-text details page is not at the top end of the image-text details page, and has certain limitation, the transition animation processing can be performed respectively for the image and non-image region in the image-text details page during the interface switch between each associated interface and the image-text details page, so that the interface switch between the associated interface and the image-text details page with different styles has better transition effect of interface switch, and the smooth transition can be achieved during switching into or exiting the image and image-text details page.

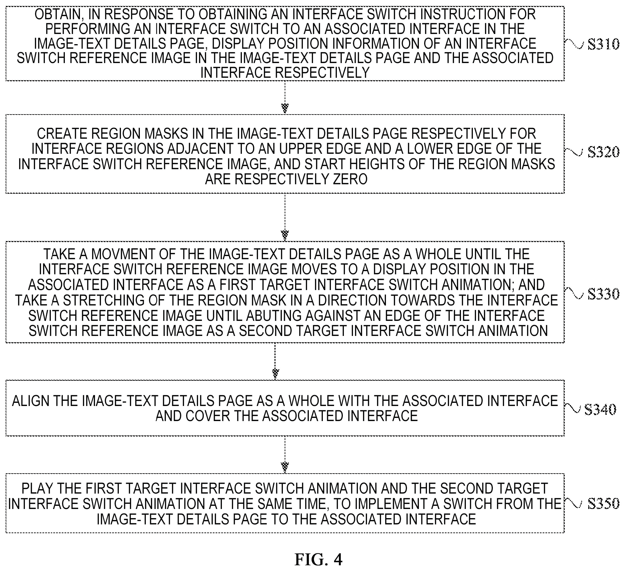

FIG. 4 is a schematic flowchart of one further method for interface switch according to embodiments of the present disclosure. On the basis of the foregoing embodiment, in the process of implementing the interface switch method flow, the process of switching from the image-text details page to the associated interface is further explained and illustrated. The method may be performed by an interface switch apparatus. The apparatus may be implemented in a form of software and/or hardware. Optionally, the apparatus may be implemented with an electronic device, and the electronic device may be a mobile terminal, a PC terminal, a server, or the like.

As shown in FIG. 4, the method for interface switch includes the following.

In S310, in response to obtaining an interface switch instruction for performing an interface switch to an associated interface in the image-text details page, display position information of an interface switch reference image in the image-text details page and the associated interface is obtained respectively.

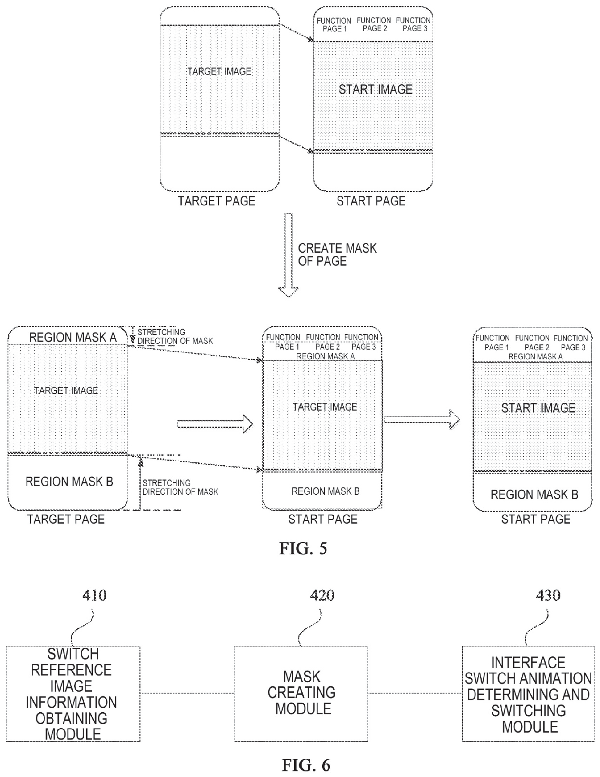

In this embodiment, the interface switch from the image-text details page to the associated interface may be return from the image-text details page to the associated interface, for example, the user clicks a return operation (an interface switch instruction) on the image-text details page, and the interface returns to the previous interface of the image-text details page. The specific interface switch process may be the specific switch process shown in FIG. 5. It should be noted that the target page in FIG. 5 represents the image-text details page, and is a switch target page for this interface switch, and the start page in FIG. 5 is the associated interface before entering the image-text details page, rather than a switch start page of this interface switch process. The interface switch process in FIG. 5 may be understood as an inverse process of the interface switch process in FIG. 3.

After obtaining the interface switch instruction, it may be determined that the image-text details page is the switch start page, and the associated interface having the link relationship with the image-text details page is the switch target page. There may be a plurality of images in the pre-loaded switch target page, and there is predetermined play logic among each image, in order to ensure that the play progress of image after the interface switch is synchronized with the play progress of image before the interface switch, the current display image of the switch start page is determined as an interface switch reference image. Then, display position information of the interface switch reference image in the image-text details page and the associated interface is obtained respectively, so as to perform subsequent interface switch animation processing based on the obtained display position information.

Specifically, when the interface switch instruction is obtained on the switch start page, for example, the user clicks the return operation control on the image-text details page to trigger the interface switch of, and the associated interface having the link relationship with the image-text details page is determined as the switch target page. Then, the switch target page is pre-loaded in advance before the switch target page is displayed, and the transition animation in the corresponding interface switch process is generated based on the solution of this embodiment.

S320, region masks respectively for interface regions adjacent to an upper edge and a lower edge of the interface switch reference image are created in the image-text details page, and start heights of the region masks are respectively zero.

The interface switching process is a process in which the image-text details page is gradually not displayed, and the image-text details page is gradually displayed. Therefore, the start height of the region mask created in the image-text details page is zero, that is, at the start stage the image and image-text details page has not yet been covered, and the height gradually increases in the subsequent animation process, so as to slowly cover the region other than the interface reference image in the image-text details page.

S330, a movment of the image-text details page as a whole until the interface switch reference image moves to a display position in the associated interface is taken as a first target interface switch animation; and a stretching of the region mask in a direction towards the interface switch reference image until abuting against an edge of the interface switch reference image is taken as a second target interface switch animation.

S340: the image-text details page as a whole is aligned with the associated interface and the associated interface is covered by the image-text details page.

The target page is directly overlaid on the start page, and the terminal display interface still stays on the target page for the user.

S350, the first target interface switch animation and the second target interface switch animation are played at the same time, to implement a switch from the image-text details page to the associated interfac.

The two region masks change symmetrically, with their heights increasing simultaneously and expanding towards the center of the screen. When the heights of the two area masks expand to the maximum value and are adjacent to the interface switch reference image, the target page can be destroyed to complete the interface transition process.

According to the technical solution of the embodiments of the disclosure, the display position information of the interface switch reference image in the image-text details page and the associated interface is respectively obtained when the interface switch instruction for performing interface switch to the associated interface is obtained in the image-text details page; the region mask is respectively created in the image-text details page for the interface region adjacent to the upper edge and the lower edge of the interface switch reference image, and the start heights of the region mask are respectively zero; a movment of the image-text details page as a whole until the interface switch reference image moves to a display position in the associated interfac ia taken as a first target interface switch animation; a stretching of the region mask in a direction towards the interface switch reference image until abuting against an edge of the interface switch reference image is taken as a second target interface switch animation; the image-text details page as a whole is aligned with the associated interface and covers the associated interface, and the first target interface switch animation and the second target interface switch animation are played at the same time, so as to implement a switch from the image-text details page to the associated interfac The technical solution provided by the embodiments of the disclosure, the problem that the interface skipping scheme between the existing associated interface and the image and image-text details page is not suitable for the image in the image and image-text details addresses the issue that the existing interface switch scheme between the associated interface and the image-text details page is not applicable to the case that image in the image-text details page is not at the top end of the image-text details page, and has certain limitation, the transition animation processing can be performed respectively for the image and non-image region in the image-text details page during the interface switch between each associated interface and the image-text details page, so that the interface switch between the associated interface and the image-text details page with different styles has better transition effect of interface switch, and the smooth transition can be achieved during switching into or exiting the image and image-text details page.

FIG. 6 is an apparatus for interface switch according to embodiments of the present disclosure. The apparatus is applicable to an interface is switch scenario, and particularly to an interface is switch case between an image-text details page and an associated interface, and may be applied to an image-text details page where the image in the image-text details page is at any position on the interface, and the apparatus for interface switch may be implemented in a form of software and/or hardware, and may be configured on an electronic device. The electronic device may be a mobile terminal, a PC terminal, a server, or the like.

As shown in FIG. 6, the interface switching apparatus includes: a switch reference image information obtaining module 410, a mask creating module 420, and an interface switch animation determining and switching module 430.

The switch reference image information obtaining module 410 is configured to obtain, in response to obtaining an interface switch instruction for performing an interface switch between an image-text details page and an associated interface, display position information of an interface switch reference image in the image-text details page and the associated interface, respectively; a mask creation module 420is configured to create, based on the display position information and an interface switch direction between the image-text details page and the associated interface, a region mask for an interface region adjacent to the interface switch reference image in the image-text details page; an interface switch animation determining and switching module 430is configured to determine, based on the display position information, a target interface switch animation for the interface switch reference image and the region mask, and implement the interface switch between the image-text details page and the associated interface based on the target interface switch animation.

According to the technical solution of the embodiments of the disclosure, the display position information of the interface switch reference image in the image-text details page and the associated interface is respectively obtained when the interface switch instruction for performing an interface switch between the image-text details page and the associated interface is obtained; based on the display position information and the interface switch direction between the image-text details page and the associated interface, a region mask is created for interface region adjacent to the interface switch reference image in the image-text details page; and a target interface switch animation of the interface switch reference image and the region mask is determined based on the display position information, and an interface switch between the image-text details page and the associated interface is achieved based on the target interface switch animation. A The technical solution provided by the embodiments of the disclosure addresses the issue that the existing interface switch scheme between the associated interface and the image-text details page is not applicable to the case that image in the image-text details page is not at the top end of the image-text details page, and has certain limitation, the transition animation processing can be performed respectively for the image and non-image region in the image-text details page during the interface switch between each associated interface and the image-text details page, so that the interface switch between the associated interface and the image-text details page with different styles has better transition effect of interface switch, and the smooth transition can be achieved during switching into or exiting the image and image-text details page.

In an optional implementation, the switch reference image information obtaining module 410 is specifically configured to determine a current display image of a switch start page in the image-text details page and the associated interface as the interface switch reference imag; and obtain the display position information of the interface switch reference image in the image-text details page and the associated interface, respectively.

In an optional implementation, the mask creating module 420 is specifically configured to creat, in response to the interface switch direction being from the associated interface to the image-text details page, region masks for interface regions adjacent to an upper edge and a lower edge of the interface switch reference image, respectively, in the image-text details page, start heights of the region masks being respectively a distance from a top edge of the image-text details page to a position of the upper edge of the interface switch reference image and a distance from a bottom edge of the image-text details page to a postion of the lower edge position of the interface switch reference image; creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

In an optional implementation, the interface switch animation determining and switching module 430 is specifically configured to take a movment of the interface switch reference image, from a first display position in the associated interface to a second display position in the image-text details page, as a first target interface switch animation; and taking a shrinking of an edge of the region mask adjacent to the interface switch reference image, in a direction away from the interface switch reference image, until a height of the region mask is zero, as a second target interface switch animation.

In an optional implementation, the interface switch animation determining and switching module 430 may be further configured to take a movment of the image-text details page as a whole until the interface switch reference image moves to a display position in the associated interface as a first target interface switch imag; and take a stretching of the region mask in a direction towards the interface switch reference image until abuting against an edge of the interface switch reference image as a second target interface switch animation.

In an optional implementation, the interface switch animation determining and switching module 430 is further configured to cover the image-text details page on which the region mask is superimposed on the associated interface and aligning the image-text details page with the associated interface by using the interface switch reference image as an alignment reference; and play the first target interface switch animation and the second target interface switch animation at the same time, to implement a switch from the associated interface to the image-text details page.

In an optional implementation, the interface switch animation determining and switching module 430 may be further configured to align the image-text details page as a whole with the associated interface and covering the image-text details page on the associated interface; and play he first target interface switch animation and the second target interface switch animation at the same time, to implement a switch from the image-text details page to the associated interface.

The apparatus for interface switch provided in the embodiments of the present disclosure may perform the method for interface switch provided by any embodiment of the present disclosure, and has corresponding functional modules for performing the method and corresponding beneficial effects.

It should be noted that the units and modules included in the foregoing apparatus are only divided according to the function logic, but are not limited to the foregoing division, as long as the corresponding functions can be implemented; in addition, the specific names of the functional units are merely for ease of distinguishing, and are not intended to limit the protection scope of the embodiments of the present disclosure.

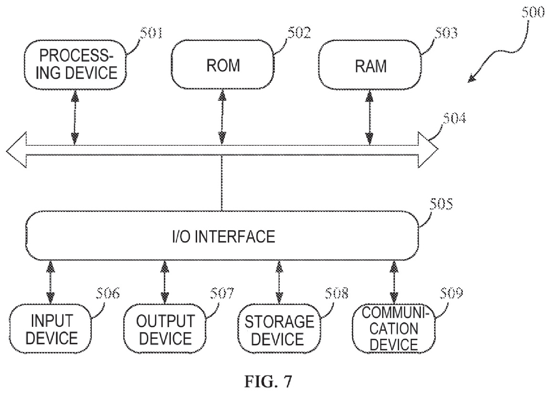

FIG. 7 is a schematic structural diagram of an electronic device according to embodiments of the present disclosure. FIG. 7 is a schematic structural diagram of an electronic device (such as the terminal device or server in FIG. 7) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 7 is merely an example, and should not impose any limitation on the functions and scope of use of the embodiments of the present disclosure.

As shown in FIG. 7, the electronic device 500 may include a processing device (for example, a central processing unit, a graphics processor, etc.) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc. ; an output device 507 including, for example, a liquid crystal display (LCD), a speaker, a vibrator, etc. ; a storage device 508 including, for example, a magnetic tape, a hard disk, etc. ; and a communication device 509. The communication device 509 may allow the electronic device 500 to communicate wirelessly or wired with other devices to exchange data. While FIG. 7 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product comprising a computer program embodied on a non-transitory computer readable medium, the computer program comprising program code for performing the method shown in the flowchart. In such embodiments, the computer program may be downloaded and installed from the network through the communication device 509, or installed from the storage device 508, or from the ROM 502. When the computer program is executed by the processing apparatus 501, the foregoing functions defined in the method of the embodiments of the present disclosure are performed.

The names of messages or information exchanged between multiple devices in embodiments of the present disclosure are for illustrative purposes only and are not intended to limit the scope of such messages or information.

The electronic device provided by the embodiments of the present disclosure and the method for interface switch provided in the foregoing embodiments belong to the same inventive concept, and technical details not described in detail in this embodiment may refer to the foregoing embodiments, and this embodiment has the same beneficial effects as the foregoing embodiments.

An embodiment of the present disclosure further provides a computer storage medium having a computer program stored thereon, the program, when executed by a processor, implements the method for interface switch provided in the foregoing embodiments.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

In some implementations, the client, server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer readable medium carries one or more programs, and when the one or more programs are executed by the electronic device, the electronic device is caused to: obtain, in response to obtaining an interface switch instruction for performing an interface switch between an image-text details page and an associated interface, display position information of an interface switch reference image in the image-text details page and the associated interface respectively; create , based on the display position information and an interface switch direction between the image-text details page and the associated interface, a region mask for an interface region adjacent to the interface switch reference image in the image-text details page; determine , based on the display position information, a target interface switch animation for the interface switch reference image and the region mask, and implement the interface switch between the image-text details page and the associated interface based on the target interface switch animation.

Computer program code for performing the operations of the present disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

An embodiment of the present disclosure further provides a computer program product, including a computer program, where the computer program, when executed by a processor, implements the method for interface switch provided in any embodiment of the present disclosure.

The computer program product, during implementation, may write computer program code for performing the operations of the present disclosure in one or more programming languages, or a combination thereof, including an object oriented programming language, such as Java, Smalltalk, C + +, and also conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

According to one or more embodiments of the present disclosure, [example 1] provides a method for interface switch , and the method includes: obtaining, in response to obtaining an interface switch instruction for performing an interface switch between an image-text details page and an associated interface, display position information of an interface switch reference image in the image-text details page and the associated interface respectively; creating, based on the display position information and an interface switch direction between the image-text details page and the associated interface, a region mask for an interface region adjacent to the interface switch reference image in the image-text details page; determining, based on the display position information, a target interface switch animation for the interface switch reference image and the region mask, and implementing the interface switch between the image-text details page and the associated interface based on the target interface switch animation.

According to one or more embodiments of the present disclosure, [example 2] provides a method for interface switch, further comprising:
in some optional implementations, obtaining the display position information of the interface switch reference image in the image-text details page and the associated interface respectively includes: determining a current display image of a switch start page in the image-text details page and the associated interface as the interface switch reference image; and obtaining the display position information of the interface switch reference image in the image-text details page and the associated interface, respectively.

According to one or more embodiments of the present disclosure, [example 3] provides a method for interface switch, including:
in some optional implementations, creating, based on the display position information and the interface switch direction between the image-text details page and the associated interface, the region mask for the interface region adjacent to the interface switch reference image in the image-text details page includes: creating, in response to the interface switch direction being from the associated interface to the image-text details page, region masks for interface regions adjacent to an upper edge and a lower edge of the interface switch reference image, respectively, in the image-image-text details page, start heights of region masks being respectively from a top edge of the image-text details page to a position of the upper edge of the interface switch reference image and a distance from a bottom edge of the image-text details page to a postion of the lower edge position of the interface switch reference image; and creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

According to one or more embodiments of the present disclosure, [example 4] provides a method for interface switch, further including:
in some optional implementations, in response to the interface switch direction being from the associated interface to the image-text details page, determining, based on the display position information, the target interface switch reference animation for the interface switch reference image and the region mask includes: taking a movment of the interface switch reference image, from a first display position in the associated interface to a second display position in the image-text details page, as a first target interface switch animation; and taking a shrinking of an edge of the region mask adjacent to the interface switch reference image, in a direction away from the interface switch reference image, until a height of the region mask is zero, as a second target interface switch animation.

According to one or more embodiments of the present disclosure, [example 5] provides a method for interface switch, further including:
in some optional implementations, in response to the interface switch direction being from the image-text details page to the associated interface, determining, based on the display position information, the target interface switch reference animation for the interface switch reference image and the region mask includes: taking a movment of the image-text details page as a whole until the interface switch reference image moves to a display position in the associated interface as a first target interface switch animation; and taking a stretching of the region mask in a direction towards the interface switch reference image until abuting against an edge of the interface switch reference image as a second target interface switch animation.

According to one or more embodiments of the present disclosure, [example 6] provides a method for interface switch, further including:
in some optional implementations, implementing the interface switch between the image-text details page and the associated interface based on the target interface switch animation includes: covering the image-text details page on which the region mask is superimposed on the associated interface and aligning the image-text details page with the associated interface by using the interface switch reference image as an alignment reference; and playing the first target interface switch animation and the second target interface switch animation at the same time, to implement a switch from the associated interface to the image-text details page.

According to one or more embodiments of the present disclosure, [example 7] provides a method for interface switch, further including:
in some alternative implementations, implementing the interface switch between the image-text details page and the associated interface based on the target interface switch animation includes: aligning the image-text details page as a whole with the associated interface and covering the image-text details page on the associated interface; and playing the first target interface switch animation and the second target interface switch animation at the same time, to implement a switch from the image-text details page to the associated interface.

According to one or more embodiments of the present disclosure, [example 8] provides an apparatus for interface switch, including: a switch reference image information obtaining module configured to obtain, in response to obtaining an interface switch instruction for performing an interface switch between an image-text details page and an associated interface, display position information of an interface switch reference image in the image-text details page and the associated interface, respectively; a mask creating module configured to create, based on the display position information and an interface switch direction between the image-text details page and the associated interface, a region mask for an interface region adjacent to the interface switch reference image in the image-text details page; an interface switch animation determining and switching module configured to determine, based on the display position information, a target interface switch animation for the interface switch reference image and the region mask, and implement the interface switch between the image-text details page and the associated interface based on the target interface switch animation.

According to one or more embodiments of the present disclosure, [example 9] provides an apparatus for interface switch, further including:
in an optional implementation, the switch reference image information obtaining module is specifically configured to determine a current display image of a switch start page in the image-text details page and the associated interface as the interface switch reference image; and obtain the display position information of the interface switch reference image in the image-text details page and the associated interface, respectively.

According to one or more embodiments of the present disclosure, [example 10] provides an apparatus for interface switch, further including:
in an optional implementation, the mask creating module is specifically configured to creat, in response to the interface switch direction being from the associated interface to the image-text details page, region masks for interface regions adjacent to an upper edge and a lower edge of the interface switch reference image, respectively, in the image-text details page, start heights of the region masks being respectively a distance from a top edge of the image-text details page to a position of the upper edge of the interface switch reference image and a distance from a bottom edge of the image-text details page to a postion of the lower edge position of the interface switch reference image; creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

According to one or more embodiments of the present disclosure, [example 11] provides an apparatus for interface switch, further including:
in an optional implementation, the interface switch animation determining and switching module is specifically configured to take a movment of the interface switch reference image, from a first display position in the associated interface to a second display position in the image-text details page, as a first target interface switch animation; and taking a shrinking of an edge of the region mask adjacent to the interface switch reference image, in a direction away from the interface switch reference image, until a height of the region mask is zero, as a second target interface switch animation.

According to one or more embodiments of the present disclosure, [example 12] provides an apparatus for interface switch, further including:
in an optional implementation, the interface switch animation determining and switching module may be further configured specifically to take a movment of the image-text details page as a whole until the interface switch reference image moves to a display position in the associated interface as a first target interface switch imag; and take a stretching of the region mask in a direction towards the interface switch reference image until abuting against an edge of the interface switch reference image as a second target interface switch animation.

According to one or more embodiments of the present disclosure, [example 13] provides an apparatus for interface switch, further including:
in an optional implementation, the interface switch animation determining and switching module is further configured to cover the image-text details page on which the region mask is superimposed on the associated interface and aligning the image-text details page with the associated interface by using the interface switch reference image as an alignment reference; and play the first target interface switch animation and the second target interface switch animation at the same time, to implement a switch from the associated interface to the image-text details page.

According to one or more embodiments of the present disclosure, [example 14] provides an apparatus for interface switch, further including:
in an optional implementation, the interface switch animation determining and switching module may be further configured to align the image-text details page as a whole with the associated interface and covering the image-text details page on the associated interface; and play he first target interface switch animation and the second target interface switch animation at the same time, to implement a switch from the image-text details page to the associated interface.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the technical solutions are formed by mutually replacing the above features with technical features, the above features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for interface switch, comprising:
obtaining, in response to obtaining an interface switch instruction for performing an interface switch between an image-text details page and an associated interface, display position information of an interface switch reference image in the image-text details page and the associated interface;
creating, based on the display position information and an interface switch direction between the image-text details page and the associated interface, a region mask for an interface region adjacent to the interface switch reference image in the image-text details page;
determining, based on the display position information, a target interface switch animation for the interface switch reference image and the region mask, and implementing the interface switch between the image-text details page and the associated interface based on the target interface switch animation.

2. The method of claim 1, wherein obtaining the display position information of the interface switch reference image in the image-text details page and the associated interface respectively comprises:
determining a current display image of a switch start page in the image-text details page and the associated interface as the interface switch reference image;
obtaining the display position information of the interface switch reference image in the image-text details page and the associated interface.

3. The method of claim 1, wherein creating, based on the display position information and the interface switch direction between the image-text details page and the associated interface, the region mask for the interface region adjacent to the interface switch reference image in the image-text details page comprises at least one of:
creating, in response to the interface switch direction being from the associated interface to the image-text details page, region masks for interface regions adjacent to an upper edge and a lower edge of the interface switch reference image, respectively, in the image-text details page, start heights of the region masks being respectively a distance from a top edge of the image-text details page to a position of the upper edge of the interface switch reference image and a distance from a bottom edge of the image-text details page to a postion of the lower edge position of the interface switch reference image;
creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

4. The method of claim 3, wherein in response to the interface switch direction being from the associated interface to the image-text details page, determining, based on the display position information, the target interface switch animation for the interface switch reference image and the region mask comprises:
taking a movment of the interface switch reference image, from a first display position in the associated interface to a second display position in the image-text details page, as a first target interface switch animation; and
taking a shrinking of an edge of the region mask adjacent to the interface switch reference image, in a direction away from the interface switch reference image, until a height of the region mask is zero, as a second target interface switch animation.

5. The method of claim 3, wherein in response to the interface switch direction being from the image-text details page to the associated interface, determining, based on the display position information, the target interface switch animation for the interface switch reference image and the region mask comprises:
taking a movment of the image-text details page as a whole until the interface switch reference image moves to a display position in the associated interface as a first target interface switch animation; and
taking a stretching of the region mask in a direction towards the interface switch reference image until abuting against an edge of the interface switch reference image as a second target interface switch animation.

6. The method of claim 4, wherein implementing the interface switch between the image-text details page and the associated interface based on the target interface switch animation comprises:
covering the image-text details page on which the region mask is superimposed on the associated interface and aligning the image-text details page with the associated interface by using the interface switch reference image as an alignment reference;
playing the first target interface switch animation and the second target interface switch animation at the same time, to implement a switch from the associated interface to the image-text details page.

7. The method of claim 5, wherein implementing the interface switch between the image-text details page and the associated interface based on the target interface switch animation comprises:
aligning the image-text details page as a whole with the associated interface and covering the image-text details page on the associated interface;
playing the first target interface switch animation and the second target interface switch animation at the same time, to implement a switch from the image-text details page to the associated interface.

8. An apparatus for interface switch, comprising:
a switch reference image information obtaining module configured to obtain, in response to obtaining an interface switch instruction for performing an interface switch between an image-text details page and an associated interface, display position information of an interface switch reference image in the image-text details page and the associated interface;
a mask creating module configured to create, based on the display position information and an interface switch direction between the image-text details page and the associated interface, a region mask for an interface region adjacent to the interface switch reference image in the image-text details page; and
an interface switch animation determining and switching module configured to determine, based on the display position information, a target interface switch animation for the interface switch reference image and the region mask, and implement the interface switch between the image-text details page and the associated interface based on the target interface switch animation.

9. An electronic device, comprising:
one or more processors;
a storage device configured to store one or more programs;
the one or more programs, when executed by the one or more processors, causing the one or more processors to implement acts for interface switch, wherein the acts comprise:
obtaining, in response to obtaining an interface switch instruction for performing an interface switch between an image-text details page and an associated interface, display position information of an interface switch reference image in the image-text details page and the associated interface;
creating, based on the display position information and an interface switch direction between the image-text details page and the associated interface, a region mask for an interface region adjacent to the interface switch reference image in the image-text details page;
determining, based on the display position information, a target interface switch animation for the interface switch reference image and the region mask, and implementing the interface switch between the image-text details page and the associated interface based on the target interface switch animation.

10. The electronic device of claim 9, wherein obtaining the display position information of the interface switch reference image in the image-text details page and the associated interface respectively comprises:
determining a current display image of a switch start page in the image-text details page and the associated interface as the interface switch reference image;
obtaining the display position information of the interface switch reference image in the image-text details page and the associated interface.

11. The electronic device of claim 9, wherein creating, based on the display position information and the interface switch direction between the image-text details page and the associated interface, the region mask for the interface region adjacent to the interface switch reference image in the image-text details page comprises at least one of:
creating, in response to the interface switch direction being from the associated interface to the image-text details page, region masks for interface regions adjacent to an upper edge and a lower edge of the interface switch reference image, respectively, in the image-text details page, start heights of the region masks being respectively a distance from a top edge of the image-text details page to a position of the upper edge of the interface switch reference image and a distance from a bottom edge of the image-text details page to a postion of the lower edge position of the interface switch reference image;
creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

12. The electronic device of claim 11, wherein in response to the interface switch direction being from the associated interface to the image-text details page, determining, based on the display position information, the target interface switch animation for the interface switch reference image and the region mask comprises:
taking a movment of the interface switch reference image, from a first display position in the associated interface to a second display position in the image-text details page, as a first target interface switch animation; and
taking a shrinking of an edge of the region mask adjacent to the interface switch reference image, in a direction away from the interface switch reference image, until a height of the region mask is zero, as a second target interface switch animation.

13. The electronic device of claim 11, wherein in response to the interface switch direction being from the image-text details page to the associated interface, determining, based on the display position information, the target interface switch animation for the interface switch reference image and the region mask comprises:
taking a movment of the image-text details page as a whole until the interface switch reference image moves to a display position in the associated interface as a first target interface switch animation; and
taking a stretching of the region mask in a direction towards the interface switch reference image until abuting against an edge of the interface switch reference image as a second target interface switch animation.

14. The electronic device of claim 12, wherein implementing the interface switch between the image-text details page and the associated interface based on the target interface switch animation comprises:
covering the image-text details page on which the region mask is superimposed on the associated interface and aligning the image-text details page with the associated interface by using the interface switch reference image as an alignment reference;
playing the first target interface switch animation and the second target interface switch animation at the same time, to implement a switch from the associated interface to the image-text details page.

15. The electronic device of claim 13, wherein implementing the interface switch between the image-text details page and the associated interface based on the target interface switch animation comprises:
aligning the image-text details page as a whole with the associated interface and covering the image-text details page on the associated interface;
playing the first target interface switch animation and the second target interface switch animation at the same time, to implement a switch from the image-text details page to the associated interface.

16. A computer-readable storage medium having a computer program stored thereon, wherein the program, when executed by a processor, implements acts for interface switch, and the acts comprises:
obtaining, in response to obtaining an interface switch instruction for performing an interface switch between an image-text details page and an associated interface, display position information of an interface switch reference image in the image-text details page and the associated interface;
creating, based on the display position information and an interface switch direction between the image-text details page and the associated interface, a region mask for an interface region adjacent to the interface switch reference image in the image-text details page;
determining, based on the display position information, a target interface switch animation for the interface switch reference image and the region mask, and implementing the interface switch between the image-text details page and the associated interface based on the target interface switch animation.

17. The computer-readable storage medium of 16, wherein obtaining the display position information of the interface switch reference image in the image-text details page and the associated interface respectively comprises:
determining a current display image of a switch start page in the image-text details page and the associated interface as the interface switch reference image;
obtaining the display position information of the interface switch reference image in the image-text details page and the associated interface, respectively.

18. The computer-readable storage medium of claim 16, creating, based on the display position information and the interface switch direction between the image-text details page and the associated interface, the region mask for the interface region adjacent to the interface switch reference image in the image-text details page comprises:
creating, in response to the interface switch direction being from the associated interface to the image-text details page, region masks for interface regions adjacent to an upper edge and a lower edge of the interface switch reference image, respectively, in the image-text details page, start heights of the region masks being respectively a distance from a top edge of the image-text details page to a position of the upper edge of the interface switch reference image and a distance from a bottom edge of the image-text details page to a postion of the lower edge position of the interface switch reference image;
creating, in response to the interface switch direction being from the image-text details page to the associated interface, region masks for interface regions adjacent to an upper edge and a lower edge of the interface switch reference image, respectively, in the image-text details page, start heights of the region masks being respectively zero.

19. The computer-readable storage medium of claim 18, wherein in response to the interface switch direction being from the associated interface to the image-text details page, determining, based on the display position information, the target interface switch animation for the interface switch reference image and the region mask comprises:
taking a movment of the interface switch reference image, from a first display position in the associated interface to a second display position in the image-text details page, as a first target interface switch animation; and
taking a shrinking of an edge of the region mask adjacent to the interface switch reference image, in a direction away from the interface switch reference image, until a height of the region mask is zero, as a second target interface switch animation.

20. A computer program product, comprising a computer program, wherein the computer program, when executed by a processor, implements acts of a method for interface switch, the acts comprising:
obtaining, in response to obtaining an interface switch instruction for performing an interface switch between an image-text details page and an associated interface, display position information of an interface switch reference image in the image-text details page and the associated interface;
creating, based on the display position information and an interface switch direction between the image-text details page and the associated interface, a region mask for an interface region adjacent to the interface switch reference image in the image-text details page;
determining, based on the display position information, a target interface switch animation for the interface switch reference image and the region mask, and implementing the interface switch between the image-text details page and the associated interface based on the target interface switch animation.
